# EUROPEAN PATENT SPECIFICATION

(11) **EP 3 214 159 B1**
(45) Date of publication and mention of the grant of the patent: **03.10.2018**
(21) Application number: 15854187.0
(22) Date of filing: 28.10.2015
(51) Int. Cl.: C10M 159/06, F16C 33/66, F16C 19/06, C10N 20/00, C10N 40/02, C10N 50/10, C10M 171/00

(54) **ROLLING BEARING**
WÄLZLAGER
PALIER À ROULEMENT

(30) Priority: 29.10.2014 JP 2014220694; 29.09.2015 JP 2015191191
(43) Date of publication of application: 06.09.2017
(73) Proprietor: NSK Ltd., Tokyo 141-8560 (JP)
(72) Inventor: KATSUNO Yoshiaki, Fujisawa-shi Kanagawa 251-8501 (JP); NAKAMURA Shinya, Fujisawa-shi Kanagawa 252-0811 (JP)
(74) Representative: Grünecker Patent- und Rechtsanwälte PartG mbB
(86) International application number: PCT/JP2015/080460
(87) International publication number: WO 2016/068215

(56) References cited:
- WO-A1-2012/055821
- GB-A- 2 055 431
- JP-A- H08 312 652
- JP-A- 2000 104 744
- JP-A- 2001 099 169
- JP-A- 2001 254 733
- JP-A- 2004 217 056
- JP-A- 2006 117 741
- JP-A- 2009 209 331
- JP-A- 2010 018 734
- JP-A- 2010 155 899
- US-A- 2 114 954
- US-A- 3 640 858

## Description

### TECHNICAL FIELD

The present invention relates to a rolling bearing.

### BACKGROUND ART

Recently, speed-up of a main shaft device for a machine tool has been remarkably developed, and attention has been paid to grease lubrication as a lubrication method for bearings from the viewpoint of demands for environmental measures, energy saving, and resource saving. As the grease lubrication, there is known a method of lubricating with grease enclosed in a bearing space at the time of bearing assembling or a method of replenishing grease at appropriate timings from a grease replenishing unit provided outside a housing to perform lubrication.

For example, Patent Document 1 discloses a spindle system in which a small amount of grease is replenished at appropriate timings to a bearing space of a rolling bearing through a grease supply pipe and a grease supply path formed in the housing from the grease replenishing unit provided outside the housing.

In addition, as a conventional bearing to be lubricated with grease, a grease reservoir part and a rolling bearing are disclosed in which the grease reservoir part is formed separately from the rolling bearing and disposed adjacently to a fixed-side raceway ring (for example, see Patent Document 2). The grease reservoir part disclosed in Patent Document 2 includes an annular container in which a grease reservoir is formed and an in-bearing insertion portion which protrudes from the container and is inserted to a vicinity of the raceway surface of the rolling bearing disposed adjacently thereto. In the grease reservoir part, grease in the container is supplied to the raceway surface of the rolling bearing from a tip discharge
port of the in-bearing insertion portion.

GB 2 055 431 A discloses a relubrication device for shaft bearings having a lubricant reservoir, wherein the lubricant of the reservoir is such as to be substantially solid below a predetermined range of temperature but substantially fluid above the predetermined range of temperature.

### PRIOR ART DOCUMENT

### PATENT DOCUMENT

Patent Document 1: JP-B-4 051 563Patent Document 2: JP-A-2008-240828

### SUMMARY OF THE INVENTION

### PROBLEMS TO BE SOLVED BY THE INVENTION

In the meantime, grease contains base oil, a thickener, and additives. In a method of replenishing the grease from the outside of the bearing, relatively hard grease having a low worked penetration may be used depending on using conditions of the bearing or ambient temperature conditions. In addition, the thickener separates from the base oil by pressure, and thus the grease may be hardened or solidified as a whole. In such a case, when a pipe route in a housing is long or several portions are curved or bent at right angles in the middle of the pipe route, depending on the degree of solidification of the thickener, there is a concern that pipe resistance increases when the grease is discharged to the bearing. In that case, it was necessary to increase discharge pressure. Further, a supply path or a grease replenishing device is additionally required in the housing so as to supply the grease to the inside of the bearing from the outside of the housing, resulting in disadvantage in cost.

In the structure in which the grease reservoir part is combined with the rolling bearing disclosed in Patent Document 2, it is necessary to combine a plurality of parts having a complicated structure, which causes a manufacturing cost to increase. The supply of the grease is performed according to a method of supplying the base oil separated from the grease from a tip of the in-bearing insertion portion using pressure fluctuation caused by a heat cycle in the grease reservoir due to the operation/stop of the rolling bearing. Therefore, there is a possibility that lubrication may be insufficient for high-speed applications (dmn 500,000 or more, and more preferably dmn 1,000,000 or more) like a bearing for a main shaft of a machine tool merely by the pressure fluctuation due to the heat cycle.

The supply of the grease is preferably controlled by appropriately adjusting the supply amount and the supply timing depending on an operation state of the bearing (for example, rotational speed or operation time). In order to control the supply of the grease, it is necessary to monitor the operation state of the bearing, resulting in complication of the control or an increase in running cost, and thus troublesome maintenance is required.

The present invention has been made in view of the above circumstances, and an object thereof is to provide a rolling bearing in which wax-containing lubricant in place of the existing grease is enclosed in the bearing to be changeable between a semi-solid state and a liquid state depending on an ambient temperature and lubrication can be performed over a long period without requiring special control.

### MEANS FOR SOLVING THE PROBLEM

The invention is set out in the appended set of claims.

The term "wax-containing lubricant" referred to in claim 1 means lubricant containing lubricating oil and wax, and the term "liquefaction point" means a temperature at which the wax-containing lubricant changes from a semi-solid state to a liquid state or from a liquid state to a semi-solid state. Further, the term "liquefaction point" follows, for example, "Rules for Regulations on Hazardous Substances in Japan", Chapter 12, Miscellaneous Provision 69-2 (liquid definition).

### EFFECTS OF THE INVENTION

According to the rolling bearing of the present invention, the wax-containing lubricant in place of the existing grease is enclosed in the bearing to be changeable between the semi-solid state and the liquid state depending on the ambient temperature. Therefore, when the temperature of the bearing exceeds the liquefaction point of the predetermined temperature, the wax-containing lubricant is liquefied and moves to the bearing space, so that the amount of lubricating oil in the bearing space can be increased. Accordingly, the lubrication can be performed over a long period without requiring special control.

### BRIEF DESCRIPTION OF THE DRAWINGS

Fig. 1 is a view for explaining an embodiment of the present invention and is a partially cut sectional view of a rolling bearing.Fig. 2 is an enlarged sectional view illustrating main parts of the rolling bearing illustrated in Fig. 1.Fig. 3 is an explanatory view of a liquefaction point of wax-containing lubricant.Fig. 4 is an enlarged view illustrating main parts of a rolling bearing according to a first modified example.
Fig. 5 is an enlarged view illustrating main parts of a rolling bearing according to a second modified example.
Fig. 6 is a partially cut sectional view of a rolling bearing according to a second configuration example.
Fig. 7 is a partially cut sectional view of a rolling bearing according to a third configuration example.

### DESCRIPTION OF EMBODIMENTS

Embodiments of the present invention will be described below in detail with reference to the accompanying drawings.

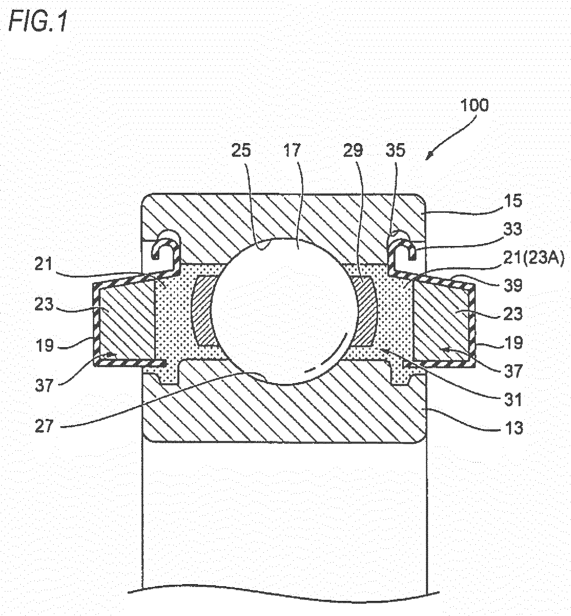

Fig. 1 is a view for explaining an embodiment of the present invention and is a partially cut sectional view of a rolling bearing.

A rolling bearing 100 of this configuration is a radial-type deep groove ball bearing, and includes an inner ring 13, an outer ring 15, a ball 17 which is a rolling element, and a seal member 19. Between the inside of the bearing and the seal member 19, grease 21 and wax-containing lubricant 23 are provided. The following description is based on the assumption that the rolling bearing 100 is applied to a high-speed (spindle) motor (not illustrated) used for driving a main shaft device of a machine tool.

An outer ring raceway surface 25 is formed on an inner circumferential surface of the outer ring 15. An inner ring raceway surface 27 is formed on an outer circumferential surface of the inner ring 13. Between the outer ring raceway surface 25 and the inner ring raceway surface 27, a plurality of freely rolling balls 17 are disposed along a circumferential direction.

The ball can be made of bearing steel, stainless steel, ceramic, or the like. The ball can also be made of SUS 440C, SUS 630, SUS 304, or the like in a use environment where rust inhibition is required. The balls 17 are retained in respective pockets of the retainer 29 and are disposed at equal intervals in the circumferential direction. The retainer 29 can be made of a resin material such as polyamide or polyphenylene sulfide in addition to carbon steel and SUS 304.

The seal member 19 is disposed at axial ends of any one raceway ring of the inner ring 13 and the outer ring 15, and blocks a bearing inner space 31. Specifically, a pair of seal members 19 are attached to both ends of the rolling bearing 100 such that the outer ring 15 and the inner ring 13 are sandwiched from both sides in an axial direction. The pair of seal members 19 make the bearing inner space 31 between the outer ring 15 and the inner ring 13 to be in a sealed state or a state close to the sealed state.

The seal member 19 is formed in an annular shape, and a spring portion 33 formed at an outer diameter side is fitted in a seal member holding groove 35 formed on the inner circumference of the outer ring 15. An inner diameter side of the seal member 19 held in the seal member holding groove 35 is disposed closely to the outer circumferential surface of the inner ring 13. An inner diameter side end of the seal member 19 may be in contact or non-contact with the inner ring 13. The seal member 19 can be made of a metal material, an elastic material such as rubber, or a composite material in which a core metal of metal is coated with rubber. In this configuration example, after a metal material is inserted into the seal member holding groove 35, the curled spring portion 33 is fixed into the seal member holding groove 35 in a caulking manner. Further, the inner diameter side end of the seal member 19 is in non-contact with the inner ring 13.

In this configuration example, the seal member 19 is formed with an oil storage space 37 that bulges outward in the axial direction from end faces of the inner ring 13 and the outer ring 15.

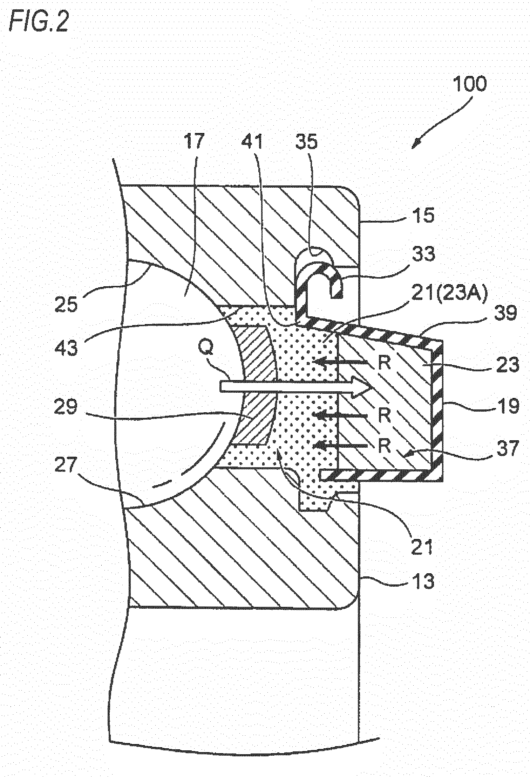

Fig. 2 is an enlarged sectional view illustrating main parts of the rolling bearing illustrated in Fig. 1. In the following description, the same members as those illustrated in Fig. 1 are denoted by the same reference numerals, and the description thereof will be omitted or simplified.

A protruding portion of the seal member 19 has a trapezoidal shape in the section illustrated in Fig. 2. The trapezoidal shape is inclined outward in a radial direction of the bearing as an oblique side 39 comes closer to the ball 17. A tip of the oblique side 39 is connected to the spring portion 33.

Between the oblique side 39 and the spring portion 33, a curvature portion 41 is formed. A radial position of the curvature portion 41 is disposed radially inward (on a lower side in Fig. 2) from an inner diameter surface 43 of the outer ring 15. Thus, lubricating oil, which will be described below, easily moves to the bearing inner space 31 from the oil storage space 37. In the rolling bearing 100, the appropriate amount of grease 21 is enclosed in the bearing inner space 31 between the outer circumferential surface of the inner ring 13 and the inner circumferential surface of the outer ring 15. Further, the wax-containing lubricant 23 is enclosed in the oil storage space 37 of the seal member 19.

The grease 21 enclosed in the bearing inner space 31 is configured to contain base oil having the same component as the lubricating oil of the wax-containing lubricant 23.

The amount of the grease 21 enclosed in the bearing inner space 31 is preferably set to 10 to 20% of the space volume of the bearing inner space 31 from the balance between a temperature rise due to viscous resistance accompanying rotation and a service life of grease. Thus, it is possible to shorten a running-in operation time of the main shaft device and shorten an operation reset time after replacement the bearing at the time of maintenance. In the example illustrated in the drawing, the bearing inner space 31 is filled with the grease 21 with no clearance, but there actually is an appropriate clearance space as described above.

The wax-containing lubricant 23 contains the lubricating oil and the wax as a basic component. The wax-containing lubricant 23 has sufficient lubricity together with the lubricating oil and the wax, and can change between the liquid state at a temperature exceeding the liquefaction point which is a predetermined temperature within a temperature range of 10°C to 70°C and the semi-solid state at a temperature equal to or lower than the liquefaction point.

The wax solidifies or semi-solidifies at a temperature lower than its melting point, and becomes a liquid state and has fluidity at a temperature higher than the melting point. In this way, when the wax is a single body, the wax reversibly changes to a semi-solid state and a liquid state as a whole at a temperature near the melting point of the wax. In contrast, the wax-containing lubricant of the present invention is a mixture (corresponding to a dilute solution obtained by addition of lubricating oil (dilute liquid) to wax (solute)) of lubricating oil (liquid) and wax (semi-solid). Therefore, the wax-containing lubricant changes from a semi-solid state to a liquid state at a temperature lower than the melting point of the wax.

The temperature (hereinafter, referred to as a "liquefaction point") at which the semi-solid state changes to the liquid state is closely related to the melting point and a mixing ratio with the lubricating oil of the contained wax. That is, from the relation of the "melting point of the wax > liquefaction point", a liquefaction temperature can be controlled to a predetermined temperature equal to or lower than the melting point of the wax by the mixing ratio between the contained wax and the lubricating oil.

Specifically, a temperature difference between the liquefaction point and the melting point of the wax can be brought to about 10°C to 30°C depending on the type of the lubricating oil and the wax and the mixing ratio therebetween. By adjustment of the type and the mixing ratio with the lubricating oil of the contained wax, it is also possible to reversibly change into the liquid state and the semi-solid state depending on the temperature.

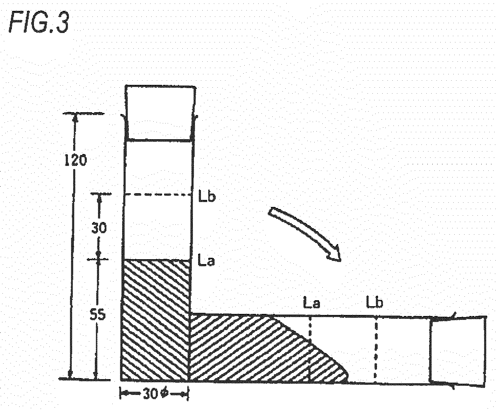

The temperature (liquefaction point) at which the semi-solid state changes to the liquid state was confirmed by the following methods as illustrated in Fig. 3. These methods follow "Rules for Regulations on Hazardous Substances in Japan", Chapter 12, Miscellaneous Provision 69-2 (liquid definition).
(1) Fill a test object (wax-containing lubricant) in two test tubes (diameter of 30 mm and height of 120 mm) up to a line La (height of 55 mm).
(2) Seal one test tube (test tube for liquid-state determination) with a rubber stopper not having holes.
(3) Seal the other test tube (test tube for temperature measurement) with a rubber stopper equipped with a thermometer. Herein, a tip of the thermometer is inserted up to a depth of 30 mm from a surface of the test object and is erected with respect to the test tube.
(4) Place two test tubes in a constant-temperature water bath maintained at a liquid-state confirmation temperature ± 0.1°C while erecting the two test tubes such that a line Lb (30 mm above from the surface of the test object) thereof sinks under a water surface in the constant-temperature water bath.
(5) Keep a state as it is for 10 minutes after the temperature of the test object in the test tube for temperature measurement reaches the liquid-state confirmation temperature ± 0.1°C.
(6) Remove the test tube for liquid-state determination in the erected state on a horizontal table from the constant-temperature water bath, tilt immediately it on the table in a horizontal direction, and measure a time until the tip of the test object reaches the line Lb of the test tube.
(7) Determine that the test object is in a "liquid state" when the time until the test object reaches the line Lb is within 90 seconds.
(8) Perform (1) to (7) by variously changing the temperature of the constant-temperature water bath, and define a temperature at which the test object is in the liquid state as a "liquefaction point".

The liquefaction point is defined and digitized within a range of about ± 2°C with respect to a certain specific temperature rather than a fixed point temperature such as a freezing point of water (0°/pure water, under atmospheric pressure).

Alternatively, as a result obtained by measuring a change in viscosity according to a gradual temperature increase using a cone-plate viscometer (E-type viscometer), since a temperature at which the change in viscosity is constant appears near the liquefaction point, this temperature can be regarded as a liquefaction point.

The wax-containing lubricant 23 enclosed in the oil storage space 37 contains 90 to 60% of a lubricating oil (containing additives) having a kinematic viscosity of 5 to 200 mm²/s at 40°C and 10 to 40% of a wax. The wax-containing lubricant 23 has a liquefaction point at a predetermined temperature within the temperature range of 10°C to 70°C.

For example, when the liquefaction point is 47°C, the wax-containing lubricant 23 becomes a liquid state at a temperature exceeding 47°C, and becomes a semi-solid state at a temperature equal to or lower than 47°C. The wax-containing lubricant 23 changes into a liquid state and a semi-solid state depending on an ambient temperature. In addition, the wax-containing lubricant 23 has characteristics in that a thickener is not contained therein like the grease 21 and solidification does not occur even when a certain pressure is applied.

As the lubricating oil applied to the wax-containing lubricant 23, any lubricating oil can be used regardless of the type of synthetic oil or mineral oil or regardless of a single or a mixture. As the synthetic oil, any one of ester synthetic oil, hydrocarbon synthetic oil, and ether synthetic oil can be used. In addition, as the mineral oil, any one of paraffinic mineral oil and naphthenic mineral oil can be used.

On the other hand, the wax is in a solid state or a semi-solid state at room temperature, and is an organic material having an alkyl group. As the wax of this embodiment, any wax can be used regardless of the type of natural wax or synthetic wax or regardless of a single or a mixture. However, since the wax becomes a mixture with the lubricating oil inside the bearing, it is preferred to have high compatibility with the lubricating oil. An example of the natural wax may include any one of animal/vegetable wax, mineral wax, and petroleum wax. An example of the synthetic wax may include any one of Fischer Tropsch wax, polyethylene wax, oil-based synthetic wax (esters, ketones, or amides), and hydrogenated wax.

As a preferable combination of the lubricating oil and the wax, from the viewpoint of compatibility, microcrystalline wax can be used for the wax when ester oil is used as the lubricating oil.

For example, an example of the wax-containing lubricant having the liquefaction point of 47°C described above may include wax-containing lubricant obtained by mixing 78.5 mass% of diester oil (dioctyl sebacate), 15 mass% of microcrystalline wax (melting point: 82°C), and 6.5 mass% of additives containing an oxidation inhibitor, an extreme pressure agent, and others.

In addition, an example of another wax-containing lubricant having a liquefaction point of 38°C may include wax-containing lubricant obtained by mixing 83 mass% of diester oil (dioctyl sebacate), 10.5 mass% of microcrystalline wax (melting point: 72°C), and 6.5 mass% of additives containing an oxidation inhibitor, an extreme pressure agent, and others.

In addition, the mixing ratio between the lubricating oil and the wax is preferred that the content of the wax is 10 to 40 mass% and the content of the lubricating oil is 90 to 60 mass% with respect to the total amount of the lubricating oil and the wax. As the mixing ratio of the wax becomes larger, the fluidity becomes worse when the wax-containing lubricant is in the semi-solid state; when the mixing ratio of the wax exceeds 40 mass%, transportability becomes worse. Particularly, in a case where the fluidity is emphasized, preferably, the mixing ratio of the wax is set to be from 10 mass% to less than 20 mass% and the mixing ratio of the lubricating oil is set to be from more than 80 mass% to 90 mass%. The wax is added as an oiliness improver for lubricating oil or grease. In the wax-containing lubricant, however, the wax is added larger than the amount of general additives as described above to hold semi-solid properties (function as a thickener) equivalent to the grease.

Further, various additives can be added to the wax-containing lubricant depending on the purpose. For example, any known oxidation inhibitor, a rust inhibitor, or an extreme pressure agent can be added in an appropriate amount.

The wax-containing lubricant may be prepared in such a manner that the wax is heated to a temperature equal to or higher than the melting point to make it into a liquid state, the lubricating oil or the lubricating oil added with additives is added to the wax and sufficiently mixed with each other, and then the mixture is cooled to a temperature (usually, about a temperature equal to or lower than the liquefaction point) lower than the melting point of the wax. Alternatively, the wax-containing lubricant may be prepared in such a manner that the lubricating oil or the lubricating oil added with additives is placed with solid wax in a suitable container, heated to a temperature equal to or higher than the melting point of the wax, and mixed with each other, and then the mixture is cooled to a temperature equal to or lower than the liquefaction point.

The wax-containing lubricant 23 is stored in a semi-solid state in the oil storage space 37 before the operation of the main shaft or at an initial stage of the operation. When the internal temperature of the bearing rises due to the operation of the main shaft, heat Q generated in the bearing is transmitted toward the outside of the bearing from the ball 17.

When the generated heat Q arrives at the wax-containing lubricant 23 in the oil storage space 37 and the wax-containing lubricant 23 reaches a temperature equal to or higher than the liquefaction point, the wax-containing lubricant 23 in the oil storage space 37 communicating with the bearing inner space 31 is partially changed into liquid lubricating oil. This lubricating oil infiltrates and moves in the bearing inner space 31 of the rolling bearing 100 in a direction indicated by an arrow R in the drawing, and is supplied to the outer ring raceway surface 25, the inner ring raceway surface 27, and the surface of the ball 17 of the rolling bearing 100.

At this time, the lubricating oil concentrates on the oblique side 39 of the seal member 19 by a centrifugal force due to the rotation of the bearing, and flows into the bearing inner space 31 along the inclination of the oblique side 39. The lubricating oil flowing into the bearing inner space 31 is supplied to the outer ring raceway surface 25, the surface of the ball 17, the inner ring raceway surface 27, and the retainer 29 along the inner diameter surface 43 of the outer ring.

After the wax-containing lubricant 23 is liquefied as described above and provided as lubricant of the rolling bearing 100, when the internal temperature of the bearing falls below the liquefaction point due to a decrease in the rotational speed of the rolling bearing 100 or operation stop, the wax-containing lubricant changes into a semi-solid state again.

As described above, the liquefaction point of the wax-containing lubricant 23 can be set to an arbitrary temperature within the range of 10°C to 70°C by adjustment of the component of the wax-containing lubricant 23. Thus, it is possible to supply an optimum amount of lubricating oil according to operating conditions of the rolling bearing 100, that is, usage results of a rotary machine to be applied or the temperature of the bearing depending on a verification experiment and durability evaluation test. In other words, the lubricating oil of the liquefied wax-containing lubricant 23 can be supplied to the inside of the rolling bearing when necessary and as much as required.

In a ball bearing, as a ball rotates along a contact angle line as an equator, the ball exhibits a pump effect, and an air flow is generated in a space in which the lubricant is enclosed. For this reason, when the wax-containing lubricant having good fluidity is used, it is possible to prevent the lubricant from staying in the bearing and to prevent a temperature rise of the bearing.

The liquefaction point can be set to be lower than the melting point of the wax depending on the melting point of the wax to be used and a mixing ratio of the wax with the lubricating oil.

For example, microcrystalline wax has a melting point of 67°C to 98°C, but wax-containing lubricant mixed with the lubricating oil at the above mixing ratio has a liquefaction point which can be set to a predetermined temperature in the range of 35°C to 50°C. Although the paraffin wax has a melting point of 47°C to 69°C, wax-containing lubricant mixed with the lubricating oil at the above mixing ratio has a liquefaction point which can be set to a predetermined temperature in the range of 20°C to 35°C.

Basically, in view of an environmental temperature around the bearing or an operating temperature of the bearing, the liquefaction point is suitably 10°C to 70°C in general. However, in a case of the application to a rolling bearing for a machine tool (for example, a rolling bearing for a main shaft of a machine tool or a rolling bearing for supporting a ball screw shaft end), the liquefaction point is preferably 30°C to 70°C and more preferably 40°C to 70°C, for the reasons described below.

In order to ensure machining accuracy of a workpiece by minimizing thermal displacement of members due to the change of an ambient temperature, a surrounding environmental condition of the machine tool to be used is kept in air-conditioning management at about 20°C to 25°C in many cases. Accordingly, when a lower limit of the liquefaction point is set to 30°C, the machine tool is at a temperature equal to or lower than the liquefaction point in a stop state, the wax-containing lubricant 23 is kept in the inside of the bearing or an oil storage portion without being liquefied. Even when the bearing or the spindle, in which the wax-containing lubricant 23 is stored, is stopped or is stocked and stored in a stop state, the wax-containing lubricant is held in the inside and the periphery of the bearing without being liquefied, and thus a lubrication function is not impaired for a long period unlike ordinary grease. Therefore, the liquefaction point is preferably set to 30°C to 70°C.

In addition, since an internal temperature of the bearing to be used for the machine tool rises as the rotational number increases, it is necessary to supply more lubricating oil to a rolling contact surface in order to maintain a proper lubrication state. In a continuous operation in normal rotation conditions (low-speed rotation range to medium-speed rotation range) or in a case of an operating condition in which low-speed rotation and maximum-speed rotation are alternately repeated, the temperature of the bearing is roughly 40°C or lower, and the lubricant around the rolling contact surface is sufficient for the amount of lubricating oil.

However, in a case of a continuous machining at maximum-speed rotation or a continuous heavy cutting at a low rotational speed, the temperature of the bearing may exceed 40°C. In this case, it may be insufficient for the lubricating oil on the rolling contact surface. For this reason, when the lower limit of the liquefaction point is set to 40°C, the wax-containing lubricant 23 around the bearing is liquefied to replenish the lubricating oil insufficient for the rolling contact surface, and thus it is possible to prevent trouble such as unexpected seizing in advance. Accordingly, it is preferable that the liquefaction point be set to 40°C to 70°C.

An operation of the above configuration will be described below.

In the rolling bearing 100 of this configuration, an appropriate amount of grease 21 is enclosed in the bearing inner space 31, and an appropriate amount of wax-containing lubricant 23 is enclosed in the oil storage space 37. As described above, the grease 21 contains the base oil having the same component as the wax-containing lubricant 23 and has affinity with the wax-containing lubricant 23.

In the initial operation stage of the rolling bearing 100 in which the internal temperature of the rolling bearing 100 is relatively low, the rolling bearing 100 is lubricated by the grease 21 enclosed in the bearing inner space 31.

The base oil of the grease 21 is held by a thickener of fiber structure, and moves between the fibers of the thickener by capillary phenomenon. In a case where a main shaft device of a machine tool or a high-speed (spindle) motor for driving a main shaft rotates at a high speed, the temperature of the peripheral portion of the bearing rises, and thus the neighboring grease 21 is liquefied accompanying the temperature rise. Therefore, the flow of the base oil becomes easy, and the service life of the grease is prolonged at high-speed rotation.

In the rolling bearing 100, the internal temperature of the bearing gradually rises as the main shaft device operates. Then, when the temperature of the wax-containing lubricant 23 enclosed in the oil storage space on the rolling bearing side reaches the liquefaction point (for example, 47°C), liquefaction of the wax-containing lubricant 23 is started. Then, the lubricating oil of the liquefied wax-containing lubricant 23 enclosed in the oil storage space 37 moves to the bearing inner space 31 and is automatically replenished to the grease 21 in the bearing inner space 31.

The grease 21 in the bearing inner space 31 can maintain the service life of the grease with ordinary grease lubrication. However, since the grease 21 has poor fluidity as compared to liquid lubricating oil, the grease 21 contributing to the lubrication of the rolling bearing 100 is limited to the base oil component in the grease closest to the rolling bearing 100.

On the other hand, the wax-containing lubricant 23 of this configuration changes from the semi-solid state to the liquid state due to the heat generation or the temperature rise of the rolling bearing 100. For this reason, the lubricating oil of the liquefied wax-containing lubricant 23 in the oil storage space infiltrates and moves from the oil storage space 37 into the grease 21 in the rolling bearing, and is gradually supplied into the rolling bearing. As a result, it is possible to dramatically prolong the lubrication life of the rolling bearing 100 by oil replenishing action from the wax-containing lubricant 23.

Further, as the rolling bearing 100 rotates at a high speed, more lubricating oil is required in a rolling contact portion or a retainer guide surface. On the other hand, the temperature of the rolling bearing 100 rises as the rotational speed increases, and this heat is transmitted to the entire bearing. For this reason, the liquefaction of the wax-containing lubricant 23 in the oil storage space is facilitated according to the temperature rise, and more lubricating oil is supplied to the rolling bearing 100.

That is, by setting of the optimum liquefaction point, an appropriate amount of lubricating oil is automatically controlled and replenished corresponding to the rotational speed even when a command is not given from the outside. For example, when the rotational speed of the bearing is equal to or higher than a predetermined rotational speed, if the liquefaction point is set such that the wax-containing lubricant 23 is liquefied and the lubricating oil is replenished, it is possible to automatically increase the amount of lubricating oil supplied at the time of high-speed rotation equal to or higher than the predetermined rotational speed, and improve seizure resistance.

Further, at the time of low-speed rotation where the amount of lubricating oil is not so necessary, the replenishment of the lubricating oil can be automatically stopped. That is, when the liquefaction point is set to a higher temperature than the internal temperature of the bearing at the time of the low-speed rotation and the rotational speed becomes equal to or higher than a required rotational speed at which the lubricating oil is necessary, the wax-containing lubricant 23 is liquefied and the lubricating oil is replenished. This makes it possible to significantly prolong the service life of the lubricant.

Furthermore, when the temperature of the bearing falls within a certain range, for example, when the rolling bearing 100 has a relatively low operating temperature and no special cooling structure is required, or when the rolling bearing continuously operates at a constant rotational speed at all times, the liquefaction point of the wax-containing lubricant 23 may be set according to the temperature of the bearing to be assumed. Even in that case, it is possible to prolong the lubrication life by optimizing the amount of wax-containing lubricant 23 to be replenished.

In a general main shaft device, the rolling bearing 100 is cooled by a refrigerant supplied to a refrigerant supply path, and the decrease in machining accuracy due to the temperature change of the bearing is suppressed. In that case, since the temperature of the bearing varies depending on the operation conditions of the rolling bearing 100, the temperature of the bearing is detected by a sensor, and the amount of lubricating oil to be supplied to the bearing is feedback-adjusted according to the detected temperature of the bearing.

In the general main shaft device described above, therefore, control according to the operating temperature of the rolling bearing 100 is required. However, according to the rolling bearing 100 of this configuration, control from the outside of the bearing is not necessary, and a necessary amount of lubricating oil is automatically supplied to the bearing inner space 31.

In this configuration, the grease 21 having affinity with the wax-containing lubricant 23 is enclosed in the bearing inner space 31 of the rolling bearing 100, but another wax-containing lubricant 23A instead of the grease 21 may be enclosed in the bearing inner space 31. In this case, if another wax-containing lubricant 23A is set to have a liquefaction point (for example, a liquefaction point of 70°C) higher than the assumed maximum operating temperature (for example, around 65°C) of the rolling bearing 100, another wax-containing lubricant 23A in the rolling bearing is constantly maintained in a semi-solid state. That is, another wax-containing lubricant 23A behaves similarly to the normal grease 21, and lubricates the rolling bearing 100.

If the liquefaction point of another wax-containing lubricant 23A is set to be lower than the assumed maximum operating temperature, there are concerns when the operating temperature exceeds the liquefaction point that liquefaction of another wax-containing lubricant 23A proceeds and the lubricant in the rolling bearing flows out to the outside. In this case, another wax-containing lubricant 23A may contribute only to initial lubrication at a low operating temperature. Therefore, it is possible to avoid the above problems by setting the liquefaction point of another wax-containing lubricant 23A to a temperature higher than the maximum operating temperature.

In this way, when the liquefaction point, at which the semi-solid state and the liquid state reversibly change, is set to the optimum value according to the operating temperature of the rolling bearing 100, the rolling bearing 100 is configured such that the optimum amount of lubricating oil can be continuously supplied to the bearing. Thus, the appropriate amount of lubricating oil can be controlled corresponding to the rotational speed (temperature of the bearing) when a command is not given from the outside.

In the rolling bearing 100, the seal member 19 is formed to protrude outward from the ends of the inner and outer rings. In this seal member 19, the oil storage space 37 having a desired volume can easily be attached to the rolling bearing 100.

Further, the wax-containing lubricant 23 changes from the semi-solid state to the liquid state due to heat generation and temperature rise. The liquefied lubricating oil infiltrates and moves into the grease 21 in the bearing inner space 31 communicating with the oil storage space 37. At this time, the lubricant easily passes through the grease 21 due to the affinity of the grease 21, and the replenishment of the lubricant into the bearing is facilitated.

A first modified example of the rolling bearing having the above configuration will be described below.

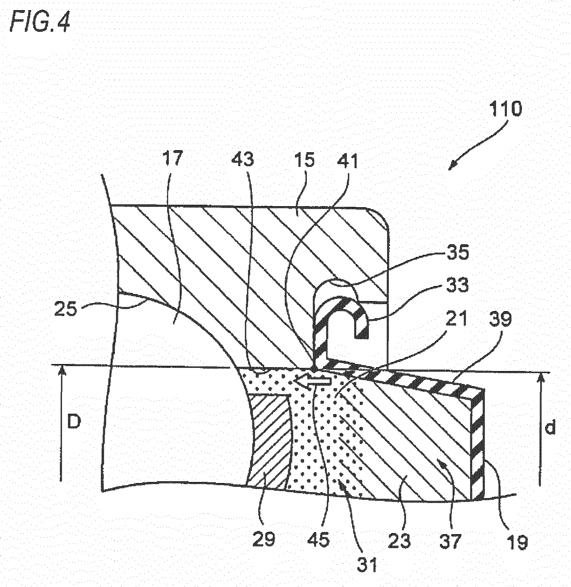

Fig. 4 is an enlarged view illustrating main parts of the rolling bearing according to the first modified example.

A rolling bearing 110 of this modified example has the same configuration as the rolling bearing 100 except for the positional relation between the curvature portion 41 of the seal member 19 and the outer ring inner diameter surface 43.

A diameter d of an inner edge portion of the curvature portion 41 of the seal member 19 having a trapezoidal shape in section of this configuration substantially coincides with an inner diameter D of the outer ring inner diameter surface 43. Accordingly, an inner surface of the oblique side 39 of the seal member 19 is smoothly connected with the outer ring inner diameter surface 43 without having a stepped portion.

According to this configuration, the lubricating oil flowing in the liquefied state from the oil storage space 37 flows into the outer ring inner diameter surface 43 from the oblique side 39 without resistance, and is supplied to the outer ring raceway surface 25 or the surface of the ball 17. Thereby, the lubricating oil can move to the bearing inner space 31 with high efficiency without staying.

A second modified example of the rolling bearing having the above configuration will be described below.

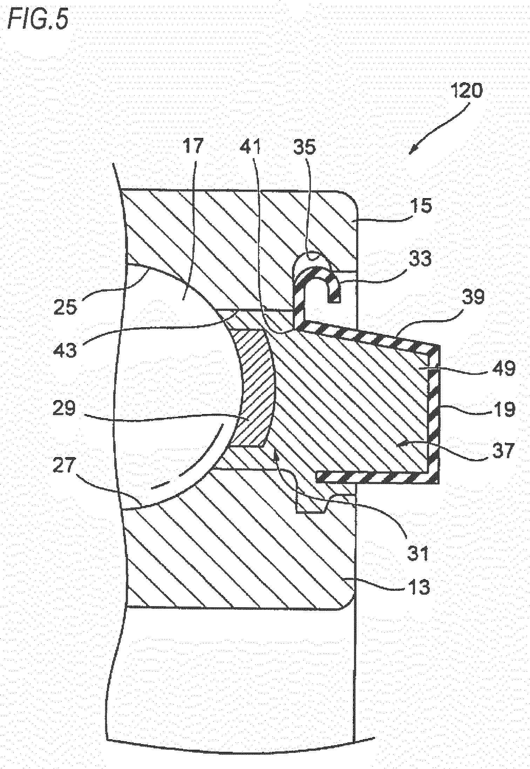

Fig. 5 is an enlarged view illustrating main parts of the rolling bearing according to the second modified example.

A rolling bearing 120 of this configuration is configured in which wax-containing lubricant 49 having a liquefaction point higher than the maximum temperature assumed during operation of the rolling bearing 120 is enclosed in the bearing inner space 31 and the oil storage space 37.

In the rolling bearing 120, the wax-containing lubricant 49 maintains a wax state at a temperature equal to or lower than the maximum reaching temperature of the bearing. That is, the wax-containing lubricant 49 behaves similarly to the normal grease 21 at the temperature equal to or lower than the maximum temperature.

When the temperature of the rolling bearing 120 rises to a temperature equal to or higher than the assumed maximum temperature, the liquefied lubricating oil is supplied into the bearing, and seizure of the rolling bearing 120 is suppressed. Therefore, when the liquefaction point is the maximum temperature or lower, it is possible to prevent the wax-containing lubricant 49 before the seizure from being liquefied and flowing out to the outside. This makes it possible to smoothly perform the initial lubrication at the operating temperature or lower and securely protect the rolling bearing 120 during overheating.

A second configuration example of a rolling bearing will be described.

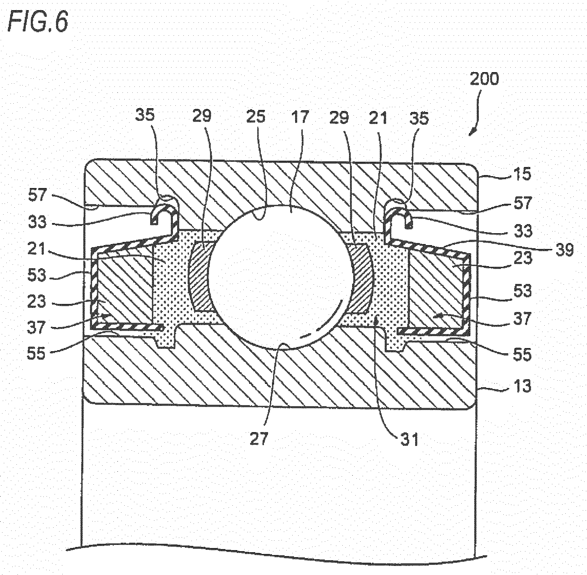

Fig. 6 is a partially cut sectional view of the rolling bearing according to the second configuration example.

In a rolling bearing 200 of this configuration, a seal member 53 is disposed inward in an axial direction from end faces of an inner ring 13 and an outer ring 15. That is, an end inner-diameter surface 57 formed on an outer side of the bearing compared to a seal member holding groove 35 of the outer ring 15 and an end outer-diameter surface 55 of the inner ring extend in the axial direction, and the seal member 53 is housed inward from the end face of the bearing.

According to the rolling bearing 200, the seal member 53 does not protrude outward from the end faces of the inner ring 13 and the outer ring 15. That is, the seal member 53 has no protrusion in a direction along an axial center of the rolling bearing 100, the degree of arrangement of the bearing is increased, and the seal member 53 can be prevented from being damaged by interference with peripheral components.

A third configuration example of a rolling bearing will be described below.

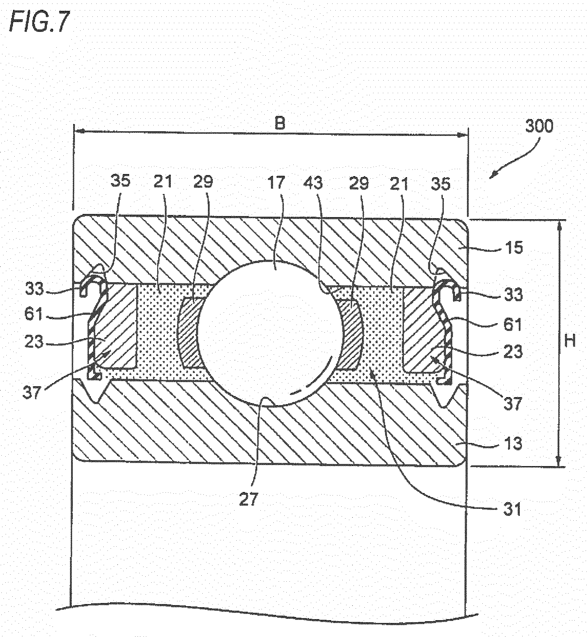

Fig. 7 is a partially cut sectional view of the rolling bearing according to the third configuration example.

A rolling bearing 300 of this configuration is configured in which: a seal member 61 does not largely protrude outward in the axial direction; and an oil storage space for wax-containing lubricant 23 is provided in a bearing inner space 31 on an axially inner side of the seal member 61.

In the rolling bearing 300 of this configuration, the outer ring 15 and the inner ring 13 satisfy a relation of 1.5 ≤ B/H ≤ 3 when a width of the bearing is defined as B and a height of the bearing is defined as H. Therefore, the bearing inner space 31 has a space sufficient to dispose the wax-containing lubricant 23.

In the rolling bearing 300, the width of the bearing and the height of the bearing are set to satisfy the relation of 1.5 ≤ B/H, and thus the volume of the oil storage space 37 can be easily secured. In addition, since the oil storage space 37 is appropriately separated from the center of the bearing, a portion with less heat transfer can be formed. For this reason, the wax-containing lubricant 23 can be held in a wax state without being entirely liquefied during the operation of the bearing.

When the relation of B/H > 3 is set, there are disadvantages that an axial space of the rolling bearing 300 becomes large and a rotary machine becomes large.

Therefore, according to the rolling bearing of this configuration, the wax-containing lubricant 23 is enclosed in the oil storage space 37 to be changeable between the semi-solid state and the liquid state depending on the ambient temperature, and thus stable lubrication can be performed over a long period.

It should be noted that the present invention is not limited to the above-described embodiments. For example, these configuration examples describe cases in which the oil storage space 37 is provided in the radial deep groove ball bearing and the wax-containing lubricant 23 is stored therein, but the present invention is not being limited to this bearing type.

Further, although the example is described in which the rolling bearing is applied to the high-speed (spindle) motor for driving the main shaft device of the machine tool, the present invention can also be applied to a rolling bearing for general industrial machines and a rolling bearing for a device, which rotates at high speed, such as a rolling bearing for other motors without being limited to this example, thereby achieving the same effect.

### DESCRIPTION OF REFERENCE NUMERALS

13: Inner ring15: Outer ring17: Rolling element19, 53, 61: Seal member21: Grease23, 23A, 49: Wax-containing lubricant25: Outer ring raceway surface27: Inner ring raceway surface
31: Bearing inner space
37: Oil storage space
100, 110, 120, 200, 300: Rolling bearing

## Claims

1. A rolling bearing comprising:
an inner ring having an inner ring raceway surface on an outer circumferential surface thereof;
an outer ring having an outer ring raceway surface on an inner circumferential surface thereof;
a plurality of rolling elements that are rollably disposed in a bearing inner space between the inner ring raceway surface and the outer ring raceway surface; and
a seal member that is positioned at axial ends of any one raceway ring of the inner ring and the outer ring and blocks the bearing inner space,
wherein the seal member defines an oil storage space that bulges outward in an axial direction,
**characterized in that**
the oil storage space encloses therein wax-containing lubricant that contains lubricating oil and wax and that based on a liquefaction point which is a predetermined temperature within a temperature range of 10°C to 70°C, is changeable between a liquid state at a temperature exceeding the liquefaction point and a semi-solid state at a temperature equal to or lower than the liquefaction point, wherein the liquefaction point is determined in accordance with "Rules for Regulations on Hazardous Substances in Japan", Chapter 12, Miscellaneous Provision 69-2,
the bearing inner space encloses therein grease, wherein
the grease contains base oil having the same component as the lubricating oil of the wax-containing lubricant.

2. The rolling bearing according to claim 1,
wherein the oil storage space of the seal member protrudes outward in the axial direction from end faces of the inner ring and the outer ring.

3. The rolling bearing according to claim 1,
wherein the seal member is disposed inward in the axial direction from the end faces of the inner ring and the outer ring.

4. The rolling bearing according to any one of claims 1 to 3,
wherein the outer ring and the inner ring satisfy a relation of 1.5 ≤ B/H ≤ 3 when a width of the bearing is defined as B and a height of the bearing is defined as H.

5. The rolling bearing according to any one of claims 1 to 4,
wherein the wax-containing lubricant is reversibly changeable between the liquid state and the semi-solid state based on the liquefaction point.

## Patentansprüche

1. Wälzlager, das umfasst:
einen Innenring, der eine Innenring-Laufbahnfläche an seiner Außenumfangsfläche aufweist;
einen Außenring, der eine Außenring-Laufbahnfläche an seiner Innenumfangsfläche aufweist;
eine Vielzahl von Wälzkörpern, die in einem Lager-Innenraum zwischen der Innenring-Laufbahnfläche und der Außenring-Laufbahnfläche so angeordnet sind, dass sie rollen können; sowie
ein Dichtungselement, das an axialen Enden eines Laufbahn-Rings des Innenrings oder/und des Außenrings positioniert ist und den Lager-Innenraum verschließt,
wobei das Dichtungselement einen Öl-Speicherraum bildet, der sich in einer axialen Richtung nach außen wölbt,
**dadurch gekennzeichnet, dass**
in dem Öl-Speicherraum wachshaltiges Schmiermittel eingeschlossen ist, das Schmieröl und Wachs enthält und auf Basis eines Verflüssigungspunktes, der auf einer vorgegebenen Temperatur innerhalb eines Temperaturbereiches von 10 °C bis 70 °C liegt, zwischen einem flüssigen Zustand bei einer Temperatur über dem Verflüssigungspunkt und einem halbfesten Zustand bei einer Temperatur auf oder unter dem Verflüssigungspunkt wechseln kann, wobei der Verflüssigungspunkt entsprechend "Rules for Regulations on Hazardous Substances in Japan" (Chapter 12, Miscellaneous Provision 69-2) bestimmt wird,
in dem Lager-Innenraum Fett eingeschlossen ist, und
das Fett Basisöl enthält, das den gleichen Bestandteil hat wie das Schmieröl des wachshaltigen Schmiermittels.

2. Wälzlager nach Anspruch 1,
wobei der Öl-Speicherraum des Dichtungselementes in der axialen Richtung von Endflächen des Innenrings und des Außenrings nach außen vorsteht.

3. Wälzlager nach Anspruch 1,
wobei das Dichtungselement in der axialen Richtung von den Endflächen des Innenrings und des Außenrings aus innen angeordnet ist.

4. Wälzlager nach einem der Ansprüche 1 bis 3,
wobei für den Außenring und den Innenring eine Beziehung 1,5 ≤ B/H ≤ 3 gilt, wenn eine Breite des Lagers als B definiert ist und eine Höhe des Lagers als H definiert ist.

5. Wälzlager nach einem der Ansprüche 1 bis 4,
wobei das wachshaltige Schmiermittel auf Basis des Verflüssigungspunktes umkehrbar zwischen dem flüssigen Zustand und dem halbfesten Zustand wechseln kann.

## Revendications

1. Palier de roulement comprenant :
un anneau interne ayant une surface de piste de roulement d'anneau interne sur sa surface circonférentielle externe ;
un anneau externe ayant une surface de piste de roulement d'anneau externe sur sa surface circonférentielle interne ;
une pluralité d'éléments de roulement qui sont disposés de manière à pouvoir rouler dans un espace interne de palier entre la surface de piste de roulement d'anneau interne et la surface de piste de roulement d'anneau externe ; et
un élément d'étanchéité qui est positionné aux extrémités axiales de l'un quelconque de l'anneau de piste de roulement de l'anneau interne et de l'anneau externe et qui bloque l'espace interne du palier,
où l'élément d'étanchéité définit un espace de stockage d'huile qui gonfle vers l'extérieur dans un sens axial,
**caractérisé en ce que**
l'espace de stockage d'huile enferme à l'intérieur le lubrifiant contenant de la cire qui contient de l'huile lubrifiante et de la cire et qui sur la base d'un point de liquéfaction qui se trouve à une température prédéterminée à l'intérieur d'une plage de températures de 10°C à 70°C, peut changer entre un état liquide à une température excédant le point de liquéfaction et un état semi-solide à une température inférieure ou égale au point de liquéfaction,
le point de liquéfaction étant déterminé selon les « Rules for Regulations on Hazardous Substances in Japan », chapitre 12, alinéas divers 69-2,
l'espace interne de palier enferme à l'intérieur de la graisse, où
la graisse contient de l'huile de base ayant le même constituant que l'huile lubrifiante du lubrifiant contenant de la cire.

2. Palier de roulement selon la revendication 1,
l'espace de stockage d'huile de l'élément d'étanchéité faisant saillie vers l'extérieur dans le sens axial depuis les faces d'extrémité de l'anneau interne et de l'anneau externe.

3. Palier de roulement selon la revendication 1,
l'élément d'étanchéité étant disposé vers l'intérieur dans le sens axial depuis les faces d'extrémité de l'anneau interne et de l'anneau externe.

4. Palier de roulement selon l'une quelconque des revendications 1 à 3,
l'anneau externe et l'anneau interne satisfaisant une relation de 1,5 ≤ B/H ≤ 3 où une largeur du palier est définie par B et une hauteur du palier est définie par H.

5. Palier de roulement selon l'une quelconque des revendications 1 à 4,
le lubrifiant contenant de la cire pouvant changer de manière réversible entre l'état liquide et l'état semi-solide sur la base du point de liquéfaction.
